# FASCICULE DE BREVET EUROPEEN

(11) **EP 0 544 574 B1**
(45) Date de publication et mention de la délivrance du brevet: **15.05.1996**
(21) Numéro de dépôt: 92403143.8
(22) Date de dépôt: 23.11.1992
(51) Int. Cl.: B23D 51/12, B23D 49/12

(54) **Scie à main**
Handsäge
Hand-held saw

(30) Priorité: 25.11.1991 FR 9114495
(43) Date de publication de la demande: 02.06.1993
(73) Titulaire: FACOM, Société dite:, F-91423 Morangis Cédex (FR)
(72) Inventeur: Grayo, Lucien Roger, F-28260 Annet (FR); Moroy, Michel Georges Pierre, F-27120 Le Val David (FR)
(74) Mandataire: Jacobson, Claude

(56) Documents cités:
- DE-C- 835 243
- FR-A- 1 368 856
- FR-A- 2 058 665
- FR-A- 2 344 366
- US-A- 3 173 461

## Description

La présente invention est relative à une scie main, notamment une scie à métaux, du type décrit dans le préambule de la revendication 1; voir US-A 3 173 461.

Les scies à main de ce type permettent d'obtenir de très fortes tensions de la lame, grâce à l'accessibilité du bouton de manoeuvre et à la possibilité de le saisir très fermement.

Cependant, dans des scies à main classiques de ce type (FR-A-1 368 856, FR-A-2 344 366), le système vis-écrou comprend une vis solidaire du bouton qui est vissée dans un écrou solidaire de la poignée. Ainsi, le vissage du bouton de manoeuvre repousse l'extrémité arrière de l'archet, ce qui assure la mise en tension de la lame.

Cette technique présente les deux inconvénients suivants. D'une part, l'actionnement de l'archet n'est pas réversible, ce qui oblige l'utilisateur à rétracter l'archet à la main à chaque changement de lame. D'autre part, en cas de rupture de la lame, l'archet, n'étant pas retenu, peut tomber.

L'invention a pour but d'éliminer ces inconvénients, c'est-à-dire de permettre un actionnement dans les deux sens de l'archet et son maintien en cas de rupture de la lame, tout en conservant la faculté d'obtenir de très fortes tensions de la lame.

A cet effet, l'invention a pour objet une scie à main du type précité, caractérisée par le contenu de la partie caractérisante de la revendication 1.

D'autres caractéristiques sont décrites dans les sous-revendications 2 à 9.

Un exemple de réalisation de l'invention va maintenant être décrit en regard des dessins annexés, sur lesquels :
- la Figure 1 est une vue extérieure d'une scie à main conforme à l'invention;
- la Figure 2 est une vue en coupe longitudinale, à plus grande échelle, de la poignée de celle-ci;
- la Figure 3 représente en élévation un embout d'accrochage de lame de la scie;
- la Figure 4 est une vue de cet embout prise suivant la flèche IV de la Figure 3;
- la Figure 5 représente en élévation un porte-lame de la scie, destiné à coopérer avec l'embout des Figures 3 et 4;
- la Figure 6 est une vue prise en coupe suivant la ligne VI-VI de la Figure 5; et
- la Figure 7 est une vue prise suivant la flèche VII de la Figure 6.

La scie à main représentée aux dessins est constituée des éléments suivants :
- une poignée 1, elle-même constituée d'un corps de poignée 2 métallique et d'un capot arrière 3 en matière plastique;
- un archet métallique tubulaire 4;
- une lame métallique 5;
- un dispositif 6 d'accrochage de lame côté archet;
- un dispositif 7 d'accrochage de lame côté poignée; et
- un système vis-écrou 8 de tension de la lame, actionné par un bouton de manoeuvre arrière 9.

Le corps de poignée 2, moulé d'un bloc, présente une large ouverture centrale 10, en forme de parallélogramme allongé verticalement, pour le passage des doigts, une partie d'extrémité supérieure traversée par une lumière horizontale 11 à section rectangulaire, et une partie d'extrémité inférieure traversée par un alésage étagé. Plus précisément, cet alésage étagé comporte, d'avant (c'est-à-dire du côté de la lame) vers l'arrière, une partie avant 12 de diamètre relativement grand, une partie médiane 13 de diamètre réduit, et une partie arrière 14 de diamètre relativement grand qui débouche dans un large évidement 15 prévu à la base et l'arrière du corps 2. La partie d'extrémité supérieure de ce corps 2 présente vers l'arrière un prolongement tubulaire 16 traversé de part en part par une fente verticale transversale 17.

Le capot 3, de forme bombée, présente à son extrémité inférieure un crochet 18 dirigé vers le bas qui vient en prise dans un évidement 19 du corps 2. Son extrémité supérieure coiffe le prolongement 16 et se fixe dans l'épaisseur de la paroi supérieure de ce dernier au moyen d'une vis 20. Cette extrémité supérieure définit une cuvette 21 dirigée vers l'arrière et percée d'un trou central 22. Le trou 22 est décalé vers le haut par rapport l'axe central de la lumière 11, et la vis 20 affleure le fond de la cuvette 21, au-dessus de ce trou, lorsque le capot 3 est en place.

L'archet 4 est tubulaire, à section rectangulaire, et de forme coudée en L. Il comporte une branche supérieure horizontale 23, relativement longue, et une branche avant 24 à peu près verticale mais légèrement inclinée vers l'avant. L'extrémité de la branche 24 est coupée en biseau de façon à présenter une tranche d'extrémité horizontale 25, et, de façon correspondante, la branche supérieure 23 présente une tranche d'extrémité arrière 26 oblique, orientée vers le haut et vers l'arrière. La partie d'extrémité de la branche 23 est reçue à libre coulissement dans la lumière 11 de la poignée.

La lame 5 est constituée d'une mince bande d'acier flexible dont les extrémités sont arrondies en arc de cercle et percées d'un orifice d'accrochage 27.

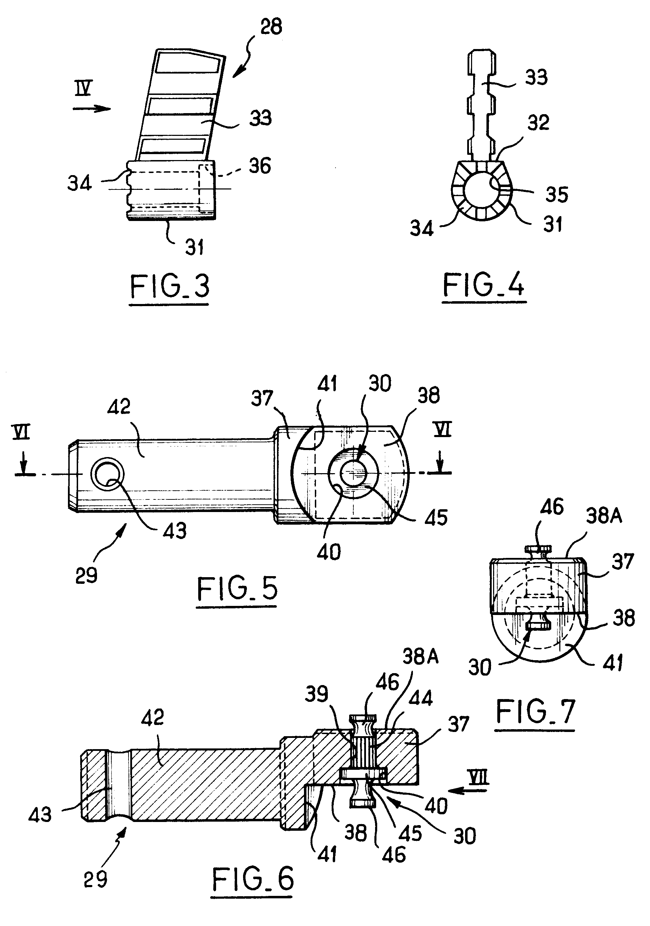

Le dispositif 6 d'accrochage de la lame côté archet est constituée d'un embout 28, que l'on voit mieux aux Figures 3 et 4, d'un porte-lame 29, que l'on voit mieux aux Figures 5 à 7, et d'une goupille d'accrochage 30.

L'embout 28 est une pièce métallique qui comporte un corps cylindrique 31 à axe horizontal sur un méplat horizontal 32 duquel fait saillie obliquement une queue 33. Cette dernière est nervurée et adaptée pour s'emmancher à force dans l'extrémité avant de l'archet, jusqu'à butée de la tranche d'extrémité 25 contre le méplat 32. La face avant du corps 31 présente quatre rainures diamétrales 34, et ce corps est percé d'un alésage 35 contre-alésé en 36 à son extrémité arrière.

Le porte-lame 29 est une pièce métallique qui comporte un corps 37 d'accrochage définissant une face plane principale 38 de positionnement latéral de la lame 5. A l'opposé de la face 38, le corps 37 présente une face auxiliaire 38A de positionnement latéral de la lame, parallèle la face 38. Le corps 37 est percé, perpendiculairement à la face 38, d'un alésage 39 contre-alésé en 40 à son extrémité adjacente à la face 38. Cette dernière est délimitée vers l'avant par un rebord 41 du corps 37 dont la forme est concave, en arc de cercle concentrique à l'alésage 39. Une queue cylindrique 42, plus longue que l'alésage 35 de l'embout 28, fait saillie sur le corps 37 avec son axe contenu dans le plan de la face 38. Cette queue est percée d'un trou diamétral 43 près de son extrémité libre.

La goupille 30 présente une partie intermédiaire moletée 44 qui s'emmanche à force dans l'alésage 39, et une collerette 45, adjacente à la partie 44, qui est reçue avec un léger jeu dans le contre-alésage 40. A chaque extrémité, la goupille comporte une partie détourée 46 à section méridienne concave en saillie sur le corps 37.

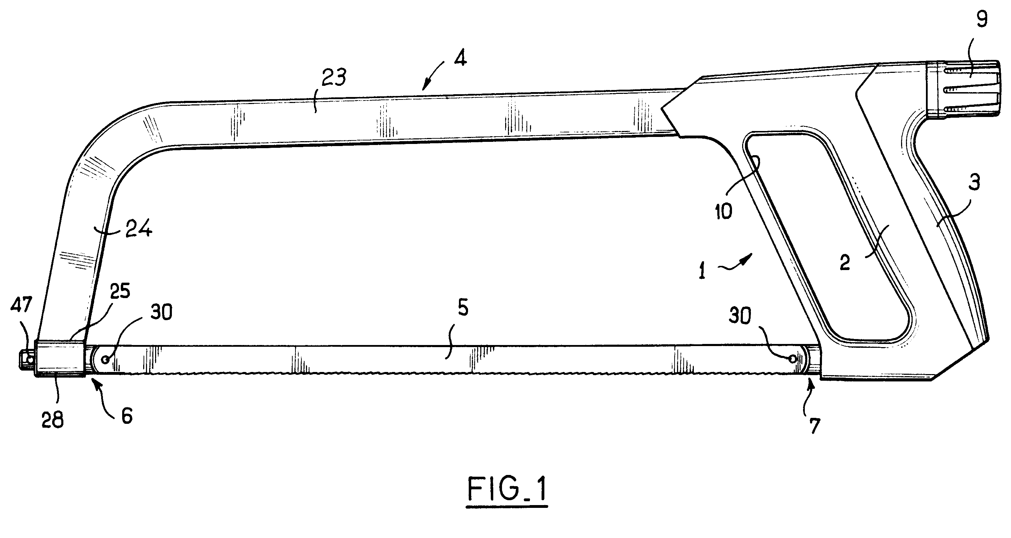

Lorsque le porte-lame 29 équipé de la goupille 30 est inséré dans l'embout 28, l'extrémité avant, cylindrique, du corps 37 est reçue dans le contrealésage 36, la queue 42 traverse librement l'alésage 35, et une goupille d'arrêt 47 (Figure 1), introduite à travers le trou 43, est reçue dans l'une des rainures 34 de l'embout 28 pour définir une position angulaire déterminée de la lame.

Le second dispositif 7 d'accrochage de lame a la même structure générale que le dispositif 6, à ceci près que l'embout correspondant est constitué par la partie d'extrémité inférieure du corps 2 de la poignée et qu'un ressort hélicoïdal 48, disposé autour de la queue 42 et dans le contre-alésage 14, est comprimé entre le fond de ce contre-alésage et la goupille d'arrêt 47.

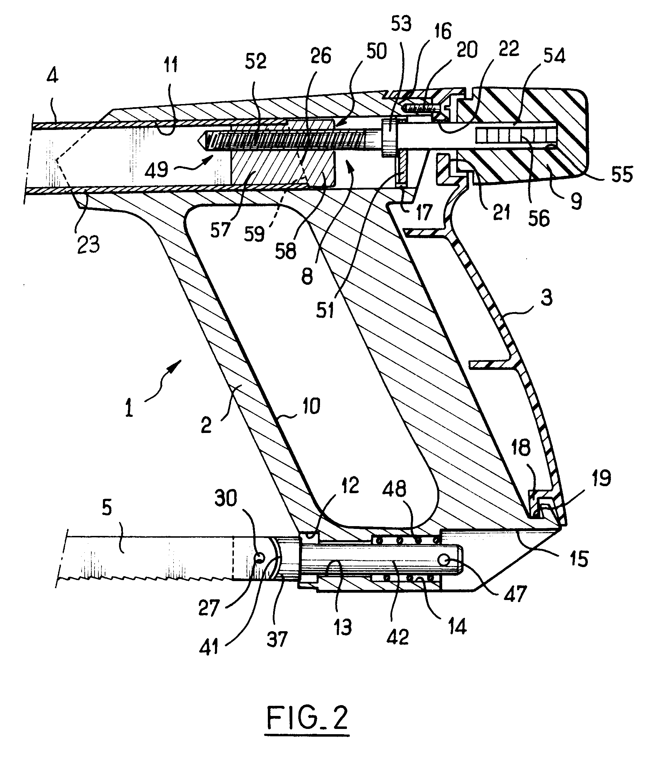

Le système vis-écrou 8 (Figure 2) est constitué d'une vis 49, d'un écrou 50 et d'une plaquette 51.

La vis 49 comprend une partie avant filetée 52, à pas à gauche, une collerette 53 située à peu près à mi-longueur, et une partie arrière 54 qui s'emmanche à force dans un alésage central borgne 55 du bouton 9. Pour renforcer cet emmanchement, la partie 54 peut, comme représenté, porter des petits reliefs 56, notamment en dents de scie.

L'écrou 50 a une section rectangulaire et comporte une partie avant 57 emmanchée à force dans l'extrémité arrière de l'archet et une partie arrière 58 dont le contour est sensiblement le même que celui de la surface extérieure de cet archet. Les parties 57 et 58 définissent entre elles un épaulement oblique 59 conjugué de la tranche d'extrémité arrière 26 de l'archet et coopérant avec celle-ci.

La plaquette 51 est insérée librement dans la fente 17 de la poignée et retenue latéralement par le capot 3. Elle présente un orifice aligné avec l'orifice 22 de ce capot et avec l'alésage taraudé de l'écrou 50.

La vis 49 est vissée à travers l'écrou. Sa partie arrière traverse les orifices de la plaquette 51 et du capot, et sa collerette 53 bute vers l'arrière contre la plaquette. Lorsque le bouton 9 est emmanché à fond sur la vis, son bord avant se trouve à une faible distance du bord de la cuvette 21 du capot.

Ainsi, lorsqu'on tourne le bouton 9 dans le sens horaire, la vis 49 repousse l'écrou 50 en prenant un appui arrière contre la plaquette 51, ce qui fait avancer l'archet et met la lame 5 en tension comme désiré.

Si la lame casse, l'archet reste solidaire de la poignée grâce au vissage de la vis 49 dans l'écrou 50. De plus, pour changer la lame, il suffit de tourner le bouton dans le sens anti-horaire pour rentrer l'archet dans la poignée dans la mesure nécessaire.

Par ailleurs, les goupilles d'accrochage 30 à collerette 45 trouvent une large surface d'appui au fond du contre-alésage 40 des porte-lame, ainsi que sur la surface latérale de ce contre-alésage, ce qui leur permet de résister efficacement à l'effort de cisaillement exercé par la lame, lorsque celle-ci se trouve dans sa position latérale principale définie par les deux faces 38. De plus, le centrage de l'extrémité de la lame en vue de son accrochage est facilité par la présence du rebord concave 41.

Il est à noter également que l'épaulement oblique 59 de l'écrou 50 présente un double avantage : d'une part, il permet de réaliser une série d'archets 4 sans chute à partir d'un tube continu; d'autre part, il assure une répartition favorable de l'effort exercé à l'interface écrou/archet par la tension de la lame.

## Revendications

1. Scie à main, du type comprenant : une poignée (1) munie d'un bouton (9) de manoeuvre à son extrémité supérieure et d'un premier dispositif (7) d'accrochage de lame à son extrémité inférieure; un archet coudé (4) dont l'extrémité supérieure est reçue à coulissement dans la poignée et dont l'autre extrémité est munie d'un second dispositif (6) d'accrochage de lame; une lame (5) s'accrochant aux deux dispositifs d'accrochage (6, 7); et un système vis-écrou (8) actionné par la rotation du bouton et servant à tendre la lame, le système vis-écrou (8) comprenant un premier organe (50) solidaire de l'extrémité arrière de l'archet (4) et un second organe (49) solidaire du bouton (9), la poignée (1) présentant une surface d'appui arrière pour ce second organe, caractérisée en ce que le bouton de manoeuvre (9) est situé en saillie vers l'arrière sur la poignée, et en ce que ladite surface d'appui arrière pour le second organe (50) est constituée par la face avant d'une plaquette perforée (51) rapportée dans la poignée (1).

2. Scie à main suivant la revendication 1, caractérisée en ce que ledit premier organe (50) est un écrou dont la partie avant est emmanchée à force dans l'archet (4), tandis que ledit second organe (49) est une vis munie d'une collerette (53) qui coopère avec ladite surface d'appui (51).

3. Scie à main suivant la revendication 1 ou 2, caractérisée en ce que la plaquette perforée (51) est insérée latéralement à travers une fenêtre (17) prévue dans la poignée (1).

4. Scie à main suivant la revendication 3, caractérisée en ce que la fenêtre (17) est recouverte par un capot arrière (3) fixé sur le corps (2) de la poignée (1).

5. Scie à main suivant la revendication 4, caractérisée en ce que le capot arrière (3) est fixé sur le corps (2) de la poignée au moyen d'une vis (20) cachée par le bouton (9).

6. Scie à main suivant l'une quelconque des revendications 1 à 5, caractérisée en ce que le bouton (9) est emmanché à force sur l'extrémité arrière (54) dudit second organe (49) du système vis-écrou (8), cette extrémité arrière présentant des saillies (56), notamment en dents de scie.

7. Scie à main suivant l'une quelconque des revendications 1 à 6, caractérisée en ce que ledit premier organe (50) du système vis-écrou (8) comporte un épaulement oblique (59) incliné vers le bas et vers l'avant, qui coopère avec une tranche d'extrémité arrière conjuguée (26) de l'archet (4).

8. Scie à main suivant l'une quelconque des revendications 1 à 7, caractérisée en ce qu'au moins l'un des dispositifs (6, 7) d'accrochage de lame comporte un porte-lame (29) percé d'un alésage étagé (39-40), et une goupille d'accrochage (30) à collerette (45) enfoncée à force dans cet alésage.

9. Scie à main suivant l'une quelconque des revendications 1 à 8, caractérisée en ce qu'au moins l'un des dispositifs (6, 7) d'accrochage de lame comporte un porte-lame (29) muni d'une goupille d'accrochage (30), cette goupille faisant saillie sur une face (38) de positionnement latéral de la lame qui est délimitée, du côté opposé à la lame (5), par une paroi concave (41).

## Claims

1. Hand-held saw, of the type comprising: a handle (1) provided with an operating knob (9) at its upper end and with a first device (7) for the attachment of the blade at its lower end; a bent bow (4) whereof the upper end is slideably received in the handle and whereof the other end is provided with a second device (6) for the attachment of the blade; a blade (5) being attached to the two attachment devices (6, 7); and a screw-nut system (8) actuated by the rotation of the knob and serving to tension the blade, the screw-nut system (8) comprising a first member (50) integral with the rear end of the bow (4) and a second member (49) integral with the knob (9), the handle (1) comprising a rear support surface for this second member, characterised in that the operating knob (9) is situated projecting rearwards on the handle, and in that said rear support surface for the second member (50) is constituted by the front face of a perforated plate (51) attached in the handle (1).

2. Hand-held saw according to Claim 1, characterised in that said first member (50) is a nut whereof the front part is force-fitted in the bow (4), whereas the said second member (49) is a screw provided with a flange (53) which cooperates with said support surface (51).

3. Hand-held saw according to Claim 1 or 2, characterised in that the perforated plate (51) is inserted laterally through an aperture (17) provided in the handle (1).

4. Hand-held saw according to Claim 3, characterised in that the aperture (17) is covered by a rear cover (3) fixed to the body (2) of the handle (1).

5. Hand-held saw according to Claim 4, characterised in that the rear cover (3) is fixed to the body (2) of the handle by means of a screw (20) concealed by the knob (9).

6. Hand-held saw according to one of Claims 1 to 5, characterised in that the knob (9) is force-fitted on the rear end (54) of said second member (49) of the screw-nut system (8), this rear end comprising projections (56), in particular in the shape of saw teeth.

7. Hand-held saw according to one of Claims 1 to 6, characterised in that said first member (50) of the screw-nut system (8) comprises an oblique shoulder (59) inclined downwards and forwards, which cooperates with a conjugate rear terminal edge (26) of the bow (4).

8. Hand-held saw according to one of Claims 1 to 7, characterised in that at least one of the devices (6, 7) for the attachment of the blade comprises a blade-holder (29) provided with a stepped bore (39-40), and an attachment cotter-pin (30) comprising a flange (45) force-fitted in this bore.

9. Hand-held saw according to one of Claims 1 to 8, characterised in that at least one of the devices (6, 7) for the attachment of the blade comprises a blade-holder (29) provided with an attachment cotter-pin (30), this cotter-pin projecting from a surface (38) for the lateral positioning of the blade which is defined, on the side opposite the blade (5), by a concave wall (41).

## Patentansprüche

1. Handsäge des Typs, der enthält: einen Griff (1), der an seinem oberen Ende mit einem Betätigungsknopf (9) und an seinem unteren Ende mit einer ersten Blatteinrastvorrichtung (7) versehen ist; einen abgewinkelten Bügel (4), dessen oberes Ende gleitend im Griff aufgenommen ist und dessen anderes Ende mit einer zweiten Blatteinrastvorrichtung (6) versehen ist; ein Blatt (5), das in den zwei Einrastvorrichtungen (6, 7) einrastet; und ein Schrauben-Mutter-System (8), das durch die Drehung des Knopfs betätigt wird und dazu dient, das Blatt einzuspannen, wobei das Schrauben-Mutter-System (8) ein erstes Element (50), das mit dem hinteren Ende des Bügels (4) fest verbunden ist, sowie ein zweites Element (49) enthält, das mit dem Knopf (9) fest verbunden ist, wobei der Griff (1) eine hintere Abstützfläche für dieses zweite Element aufweist, dadurch gekennzeichnet, daß der Betätigungsknopf (9) so angeordnet ist, daß er vom Griff nach hinten vorsteht und daß die hintere Abstützfläche für das zweite Element (50) durch die Vorderseite eines in den Griff (1) eingesetzten durchlochten Plättchens (51) gebildet ist.

2. Handsäge nach Anspruch 1, dadurch gekennzeichnet, daß das erste Element (50) eine Mutter ist, deren vorderer Teil mit Kraft in den Bügel (4) eingesteckt ist, während das zweite Element (49) eine mit einem Kopf (53) versehene Schraube ist, die mit der Abstützfläche (51) zusammenwirkt.

3. Handsäge nach Anspruch 1 oder 2, dadurch gekennzeichnet, daß das durchlochte Plättchen (51) seitlich durch ein im Griff (1) vorgesehenes Fenster (17) eingeschoben ist.

4. Handsäge nach Anspruch 3, dadurch gekennzeichnet, daß das Fenster (17) durch eine hintere Abdeckhaube (3) abgedeckt ist, die am Körper (2) des Griffs (1) befestigt ist.

5. Handsäge nach Anspruch 4, dadurch gekennzeichnet, daß die hintere Abdeckhaube (3) am Körper (2) des Griffs mittels einer durch den Knopf (9) versteckten Schraube (20) befestigt ist.

6. Handsäge nach irgendeinem der Ansprüche 1 bis 5, dadurch gekennzeichnet, daß der Knopf (9) mit Kraft auf das hintere Ende (54) des zweiten Elements (49) des Schrauben-Mutter-Systems (8) aufgesteckt ist, wobei dieses hintere Ende Vorsprünge (56), insbesondere Sägezähne, aufweist.

7. Handsäge nach irgendeinem der Ansprüche 1 bis 6, dadurch gekennzeichnet, daß das erste Element (50) des Schrauben-Mutter-Systems (8) eine schräge Schulter (59) aufweist, die nach unten und nach vorn geneigt ist und mit einer konjugierten hinteren Endscheibe (26) des Bügels (4) zusammenwirkt.

8. Handsäge nach irgendeinem der Ansprüche 1 bis 7, dadurch gekennzeichnet, daß wenigstens eine der Blatteinrastvorrichtungen (6, 7) einen Blattträger (29), durch den eine gestufte Bohrung (39-40) verläuft, sowie einen Einraststift (30) mit Flansch (45) enthält, der in diese Bohrung mit Kraft eingesetzt ist.

9. Handsäge nach irgendeinem der Ansprüche 1 bis 8, dadurch gekennzeichnet, daß wenigstens eine der Blatteinrastvorrichtungen (6, 7) einen mit einem Einraststift (30) versehenen Blattträger (29) enthält, wobei dieser Stift von einer Fläche (38) für die seitliche Positionierung des Blatts vorsteht, welche auf der dem Blatt (5) gegenüberliegenden Seite durch eine konkave Wand (41) begrenzt ist.
